Europäisches Patentamt

European Patent Office

Office européen des brevets

(19)

(11) Veröffentlichungsnummer: **0 318 690 B1**

(12) # EUROPÄISCHE PATENTSCHRIFT

(45) Veröffentlichungstag der Patentschrift: **16.12.92**

(21) Anmeldenummer: **88117460.1**

(22) Anmeldetag: **20.10.88**

(51) Int. Cl.⁵: **B60R 1/06**

(54) **Aussenrückblickspiegel für Kraftfahrzeuge.**

(30) Priorität: **03.11.87 DE 3737167**

(43) Veröffentlichungstag der Anmeldung:
**07.06.89 Patentblatt 89/23**

(45) Bekanntmachung des Hinweises auf die
Patenterteilung:
**16.12.92 Patentblatt 92/51**

(84) Benannte Vertragsstaaten:
**DE ES FR GB IT SE**

(56) Entgegenhaltungen:
**DE-A- 3 343 197        DE-A- 3 429 493**
**DE-A- 3 500 196        FR-A- 2 591 988**
**US-A- 3 993 281        US-A- 4 200 327**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Kerschbaum, Hans**
**Weissenburgerstrasse 12**
**W-8000 München 80(DE)**

EP 0 318 690 B1

## Beschreibung

Die Erfindung bezieht sich auf einen Außenrückblickspiegel für Kraftfahrzeuge nach dem Oberbegriff des Patentanspruchs 1.

Derartige Spiegel sind seit langem bekannt. Die Grundform einer flacheren Pyramide geht beispielsweise aus der DE-A-16 30 338 oder aus der DE-A-30 32 019 hervor, während die Grundform eines mehr langgestreckten Kegels beispielsweise durch das DE-U-66 04 966 vorbeschrieben ist. Die vorbekannten Außenrückblickspiegel sind zwar wohl schon auch nach aerodynamischen Gesichtspunkten gestaltet worden, doch genügt der Luftwiderstandsbeiwert noch nicht den heutigen Ansprüchen. Das Totwassergebiet liegt darüber hinaus in der Höhe der Seitenscheiben, was bei Nässe zu einer schnelleren unerwünschten Verschmutzung dieser Scheiben führt.

Es ist zwar schon erkannt worden, daß hier das Vorsehen eines Strömungskanals zwischen dem Gehäuse des Außenrückblickspiegels und der benachbarten Fahrzeugkontur Abhilfe schaffen kann (DE-A-33 43 197 oder DE-A-35 00 196), wobei in einem Fall auch schon durch zwei Tragarme des Gehäuses ein nach unten gerichteter Strömungskanal zum besseren Sauberhalten der Seitenscheiben vorgesehen wurde. Auch diese Außenrückblickspiegel sind aerodynamisch noch verbesserungswürdig.

Es ist ferner bekannt (DE-A-35 00 196), das Gehäuse eines Außenrückblickspiegels vorne stark zu verjüngen und mit einem gewissen Abstand um den vorderen Dachpfosten bis in den Bereich des seitlichen Randes der Windschutzscheibe herumzuführen. Das Gehäuse hat an seinem vorderen Ende einen schmalen hochkant stehenden Rechteckquerschnitt. Den Abschluß bildet eine von der ankommenden Luftströmung senkrecht angeströmte, wenn auch schmale Gehäusewand. Man muß davon ausgehen, daß eine derart quer in der Luftströmung liegende Gehäusewand ganz erhebliche Geräuschprobleme aufwirft.

Der Erfindung liegt die Aufgabe zugrunde, einen Außenrückblickspiegel der vorausgesetzten Gattung zu schaffen, mit dem der Luftwiderstand noch weiter vermindert werden kann, wobei auch eine weitere Verringerung der Verschmutzung der Seitenscheiben erreicht werden soll.

Diese Aufgabe wird erfindungsgemäß mit einem Außenrückblickspiegel nach dem Oberbegriff des Patentanspruchs 1 durch die im Kennzeichen dieses Patentanspruchs angegebenen Merkmale gelöst. Dank dieser Maßnahmen wirkt die Spitze der schiefen Pyramide besonders günstig als Strömungsteiler für die Luftströmung, die sich im unteren Bereich des vorderen Dachpfostens einstellt, wo in der Regel der Außenrückblickspiegel angeordnet ist. Die oberhalb der Fronthaube anströmende und von der Windschutzscheibe abgedrängte Luft strömt nicht nur horizontal um den vorderen Dachpfosten herum, sie hat insbesondere im Bereich der Dachpfostenwurzel auch eine nach unten gerichtete Bewegungskomponente. Der in dieser Art auf das Gehäuse des Außenrückblickspiegels zuströmenden Luft setzt der erfindungsgemäße Außenrückblickspiegel durch seine ideale Zuströmungsaufteilung wenig Luftwiderstand entgegen. Nach der Aufweitung der Umströmung erfolgt durch leicht konvergierend nach innen geneigte Abströmtangenten an den Gehäusehinterkanten eine allmähliche Zusammenführung der Strömung, die das eingeschlossene, ruhige Totwassergebiet begrenzt. Dabei wird auch der zwischen der Gehäuseinnenseite und der angrenzenden Fahrzeugkontur bzw. der Seitenscheibe freigehaltene Strömungsquerschnitt besonders wirksam durchströmt, so daß das Totwassergebiet sehr gut nach hinten, unten und in den Bereich des Türaußenbleches unterhalb der Türbrüstung abgedrängt werden kann. Die Seitenscheiben bleiben daher sauber.

Die Erfindung wird im folgenden anhand eines in der Zeichnung dargestellten Ausführungsbeispiels näher erläutert. Es zeigen

Fig. 1 eine perspektivische Ansicht von vorne außen auf die erfindungsgemäße Anordnung eines Außenrückblickspiegels; im Bereich des vorderen Dachpfostens eines Kfz.

Fig. 2 eine teils schematisierte Seitenansicht;

Fig. 3 eine leicht perspektivische Ansicht von hinten innen;

Fig. 4 eine Draufsicht und

Fig. 5 eine Schnittdarstellung nach den Linien V-V in Fig. 4 mit dazugehörigen seitlichen Schemaansichten.

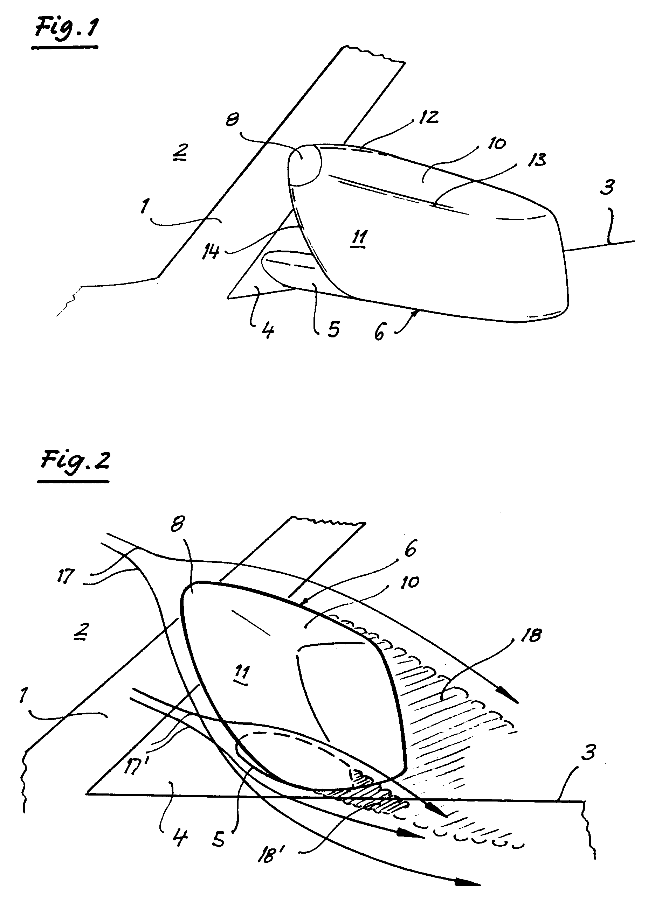

In Fig. 1 der Zeichnung ist der vordere linke Dachpfosten 1 angedeutet, der sich an die Windschutzscheibe 2 anschließt. An der ebenfalls lediglich angedeuteten Tür 3 ist über ein übliches, dreieckiges Halteteil 4 der Tragarm 5 des Gehäuses 6 des Außenrückblickspiegels befestigt. Das Gehäuse 6 nimmt das Spiegelglas auf und ist in einer nicht näher dargestellten Weise bei einer bestimmten Krafteinwirkung zu der Fahrzeugkontur 7 hin abklappbar.

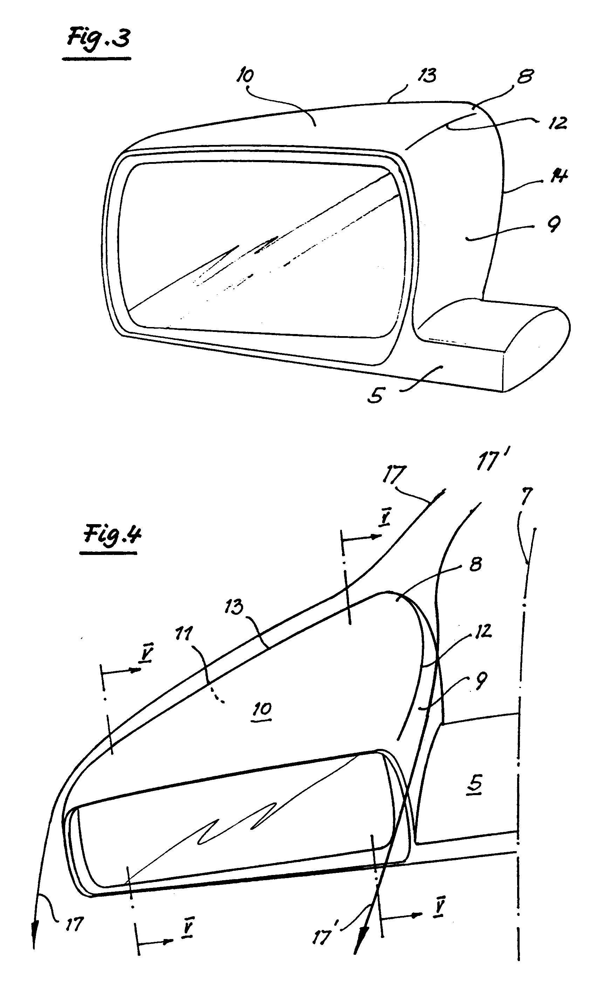

Wie man insbesondere in Fig. 4 erkennt, hat das Gehäuse 6 von der in strichpunktierten Linien angedeuteten Fahrzeugkontur 7 einen Abstand, so daß an seiner Innenseite Luft vorbeiströmen kann.

Das Gehäuse 6 hat die Form einer schiefen Pyramide. Die in Fahrtrichtung nach vorn gerichtete, abgerundete Spitze 8 der schiefen Pyramide ist im oberen und der Fahrzeugkontur 7 zugewandten Eckbereich des Gehäuses 6 vorgesehen. In dem

2

an die abgerundete Spitze 8 angrenzenden Bereich des Gehäuses 6 handelt es sich um eine dreiseitige schiefe Pyramide mit einer der Fahrzeugkontur 7 zugekehrten Innenseite 9, einer Oberseite 10 und einer Vorderseite 11. Den Übergang der eben erwähnten Seiten bilden abgerundete Teilungskanten 12, 13 und 14, die den etwa zentral auf die Spitze 8 zuströmenden Luftstrom in im wesentlichen drei Teilströme aufteilen.

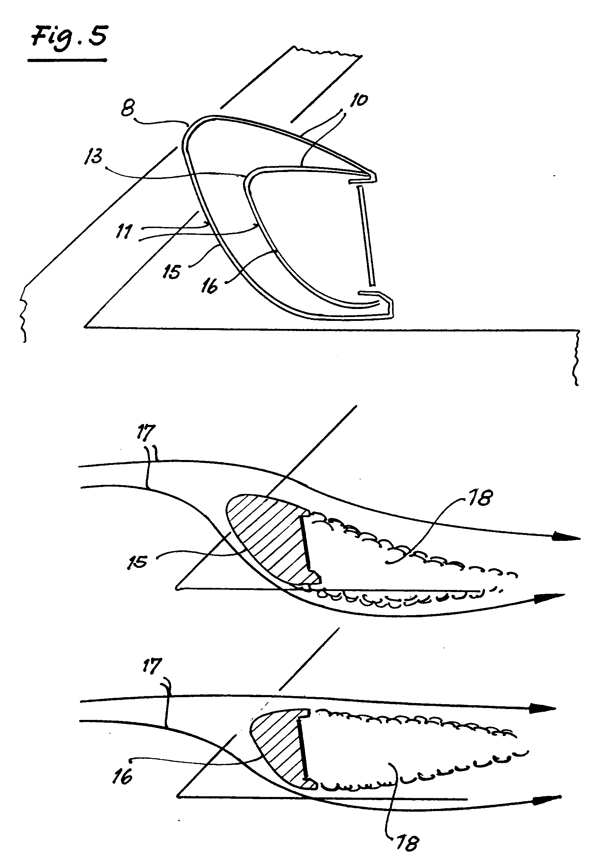

In Fig. 5 sind vertikale Teilschnitte durch das Spiegelgehäuse dargestellt, wobei die Kontur 15 einen Schnitt am inneren Endbereich des Gehäuses 6 darstellt und die Kontur 16 einen Schnitt in dessen äußerem Bereich. Man erkennt, daß zumindest im inneren Bereich des Gehäuses 6 die Oberseite 10 von vorne oben nach hinten unten geneigt ist. Weiterhin ist die Vorderseite 11 nach hinten unten geneigt und die Innenseite 9 ist hinten nach außen geneigt. Auf diese Weise wird die über die Fronthaube des Fahrzeugs anströmende und von der Windschutzscheibe zur Seite sowie im Bereich des Außenrückblickspiegels auch nach unten strömende, durch die Strömungspfeile 17 veranschaulichte Luft besonders widerstandsarm um das Gehäuse 6 des Außenrückblickspiegels gelenkt. Hierzu ist es weiterhin günstig, wenn die Vorderseite 11 - in Draufsicht gesehen - zusätzlich noch in ihrem äußeren Bereich nach hinten geneigt ist.

Die hier beschriebene Gestaltung des Gehäuses 6 des Außenrückblickspiegels ermöglicht eine deutliche Erniedrigung des vom Außenrückblickspiegel erzeugten Teil-Widerstandsbeiwerts. Es bilden sich relativ geringe, im fahrzeugnahen Bereich außerdem nach unten gerichtete Totwasserzonen 18 aus, was darüber hinaus das Freihalten der Seitenscheibe von verwirbelten Schmutzwassertröpfchen begünstigt.

Wie man insbesondere in Fig. 1 und 3 erkennt, ist das Gehäuse 6 über einen annähernd horizontalen Tragarm 5 mit der Karosserie bzw. der Tür 3 des Fahrzeugs verbunden, der in ein in der Regel dreieckiges Halteteil 4 übergeht. Der Tragarm 5 hat einen flügelprofilähnlichen Querschnitt und kann unterteilt sein sowie einen Gelenkmechanismus enthalten, der das Abklappen des Gehäuses zur Fahrzeugkontur 7 hin ermöglicht, wenn eine bestimmte Stoßbelastung auftritt.

Gemäß Fig. 2 ist der Profilquerschnitt des Tragarms 5 von vorne oben nach hinten unten gerichtet und damit der Strömungsrichtung der karosserienahen Luftströmung (Strömungspfeile 17') ebenfalls gut angepaßt. Auch im Bereich des Tragarms 5 bildet sich somit ein nur sehr kleines Totwassergebiet 18' aus.

**Patentansprüche**

1. Anordnung eines Außenrückblickspiegels im Bereich des vorderen Dachpfostens (1) eines Kraftfahrzeugs, mit einem das Spiegelglas aufnehmenden Gehäuse (6), das in einem Abstand von der Fahrzeugkontur (7) angeordnet ist und annähernd die Form einer Pyramide mit einer in Fahrtrichtung nach vorne gerichteten, abgerundeten Spitze (8) hat, dadurch gekennzeichnet, daß das Gehäuse (6) die Form einer schiefen Pyramide hat, deren abgerundete Spitze (8) im oberen und der Fahrzeugkontur (7) zugewandten Eckbereich des Gehäuses (6) vorgesehen ist, wobei die Pyramide zumindest in dem an die Spitze (8) angrenzenden Bereich eine dreiseitige schiefe Pyramide mit einer der Fahrzeugkontur (7) zugekehrten Innenseite (9), einer Oberseite (10) und einer Vorderseite (11) ist.

2. Anordnung nach Anspruch 1, dadurch gekennzeichnet, daß die Innenseite (9), die Oberseite (10) und die Vorderseite (11) über Teilungskanten (12, 13, 14) ineinander übergehen.

3. Anordnung nach Anspruch 1, dadurch gekennzeichnet, daß die Oberseite (10) von vorne nach hinten unten geneigt ist.

4. Anordnung nach Anspruch 1, dadurch gekennzeichnet, daß die Oberseite (10) in ihrem der Fahrzeugkontur (7) zugewandten inneren Bereich nach hinten unten geneigt ist und im äußeren Bereich annähernd waagerecht verläuft.

5. Anordnung nach Anspruch 1, dadurch gekennzeichnet, daß die Innenseite (9) hinten nach außen geneigt ist.

6. Anordnung nach Anspruch 1, dadurch gekennzeichnet, daß die Vorderseite (11) nach hinten unten geneigt ist.

7. Anordnung nach Anspruch 1, dadurch gekennzeichnet, daß die Vorderseite (11) zusätzlich in ihrem äußeren Bereich nach hinten geneigt ist.

8. Anordnung nach Anspruch 1, dadurch gekennzeichnet, daß das Gehäuse (6) über einen annähernd horizontalen Tragarm (5) mit der Karosserie bzw. einer Fahrzeugtür (3) in Verbindung steht, der einen flügelprofilähnlichen Querschnitt hat.

9. Anordnung nach Anspruch 7, dadurch gekennzeichnet, daß die Sehne des Profilquerschnitts des Tragarms (5) von vorne oben nach hinten unten gerichtet ist.

## Claims

1. An arrangement of an exterior rear view mirror in the region of the front roof jamb (1) of a motor vehicle, comprising a housing (6) which receives the glass mirror and which is arranged at a distance from the vehicle contour (7) and has approximately the shape of a pyramid with a rounded tip (8) directed towards the front in the direction of travel, characterised in that the housing (6) has the shape of an inclined pyramid, the rounded tip (8) of which is provided in the upper corner region of the housing (6) facing the vehicle contour (7), and that the pyramid, at least in the region adjoining the tip (8), is a three-sided inclined pyramid with an inner side (9) facing the vehicle contour (7), an upper side (10), and a front side (11).

2. An arrangement according to Claim 1, characterised in that the inner side (9), the upper side (10) and the front side (11) continue into each other via dividing edges (12, 13, 14).

3. An arrangement according to Claim 1, characterised in that the upper side (10) is inclined from the front to the rear bottom.

4. An arrangement according to Claim 1, characterised in that the upper side (10) in its inner region facing the vehicle contour (7) is inclined towards the rear bottom and in the outer region runs approximately horizontally.

5. An arrangement according to Claim 1, characterised in that the inner side (9) is inclined outwardly to the rear.

6. An arrangement according to Claim 1, characterised in that the front side (11) is inclined to the rear bottom.

7. An arrangement according to Claim 1, characterised in that the front side (11) is additionally inclined toward the rear in its outer region.

8. An arrangement according to Claim 1, characterised in that the housing (6) is connected with the body or respectively a vehicle door (3) via an approximately horizontal support arm (5) which has a cross-section similar to a wing profile.

9. An arrangement according to Claim 7, characterised in that the chord of the profile cross-section of the support arm (5) is directed from the front top to the rear bottom.

## Revendications

1. Implantation d'un rétroviseur dans la zone du montant avant (1) d'un véhicule, avec un boîtier (6) recevant le miroir, qui se trouve placé à une certaine distance du contour du véhicule (7) et a approximativement la forme d'une pyramide avec un sommet (8) arrondi, dirigé vers l'avant dans le sens de la marche, implantation caractérisée en ce que le boîtier (6) a la forme d'une pyramide inclinée, dont le sommet (8) arrondi est prévu dans la zone en coin supérieure du boîtier (6) tournée vers le contour du véhicule (7), la pyramide étant au moins dans la zone voisine du sommet (8) une pyramide inclinée et à trois faces, avec une face intérieure (9) tournée vers le contour du véhicule (7), une face supérieure (10) et une face antérieure (11).

2. Implantation selon la revendication 1, caractérisée en ce que la face intérieure (9), la face supérieure (10) et la face antérieure (11) se transforment l'une dans l'autre par des arêtes de séparation (12, 13, 14).

3. Implantation selon la revendication 1, caractérisée en ce que la face supérieure (10) est inclinée de haut en bas de l'avant vers l'arrière.

4. Implantation selon la revendication 1, caractérisée en ce que la face supérieure (10) est inclinée dans sa zone intérieure tournée vers le contour du véhicule (7) vers l'arrière et en bas et se développe à peu près horizontalement dans sa zone extérieure.

5. Implantation selon la revendication 1, caractérisée en ce que la face intérieure (9) est inclinée en arrière vers l'extérieur.

6. Implantation selon la revendication 1, caractérisée en ce que la face antérieure (11) est inclinée en dessous vers l'arrière.

7. Implantation selon la revendication 1, caractérisée en ce que la face antérieure (11) est en plus inclinée vers l'arrière dans sa zone extérieure.

8. Implantation selon la revendication 1, caractérisée en ce que le boîtier (6) est relié à la carrosserie ou à une portière (3) du véhicule par un bras de support (5) approximativement horizontal, qui a une section transversale semblable à un profil d'aile.

**9.** Implantation selon la revendication 7, caractérisée en ce que la corde de la section transversale du profil du bras de support (5) est dirigée
de l'avant vers l'arrière du haut vers le bas.

**Fig.1**

**Fig.2**

_Fig.3_

_Fig.4_

Fig.5